# FASCICULE DE BREVET EUROPEEN

(11) **EP 4 698 418 B1**
(45) Date de publication et mention de la délivrance du brevet: **04.11.2026**
(21) Numéro de dépôt: 24720150.2
(22) Date de dépôt: 17.04.2024
(51) Int. Cl.: B60W 60/00, G05D 1/00, G06N 7/02, G06N 20/00, B64D 45/00, G06N 3/126, G05B 23/02

(54) **PROCÉDÉ ET DISPOSITIF ÉLECTRONIQUE D'AIDE AU PILOTAGE D'UN AÉRONEF VIA LA SURVEILLANCE D'AU MOINS UN CRITÈRE OPÉRATIONNEL, PROGRAMME D'ORDINATEUR ET AÉRONEF ASSOCIÉS**
VERFAHREN UND ELEKTRONISCHE VORRICHTUNG ZUR PILOTENUNTERSTÜTZUNG EINES LUFTFAHRZEUGS ÜBER DIE ÜBERWACHUNG MINDESTENS EINES BETRIEBSKRITERIUMS, ENTSPRECHENDES COMPUTERPROGRAMM UND LUFTFAHRZEUG
METHOD AND ELECTRONIC DEVICE FOR ASSISTING IN THE PILOTING OF AN AIRCRAFT VIA THE MONITORING OF AT LEAST ONE OPERATIONAL CRITERION, AND ASSOCIATED COMPUTER PROGRAM AND AIRCRAFT

(30) Priorité: 17.04.2023 FR 2303810
(43) Date de publication de la demande: 25.02.2026
(73) Titulaire: THALES, 92190 Meudon (FR)
(72) Inventeur: THIRIET, Aurélien, 33700 MERIGNAC (FR); HAURET, Daniel, 33700 MERIGNAC (FR); DIAZ-PINEDA, Jaime, 33700 MERIGNAC (FR)
(74) Mandataire: Lavoix
(86) Numéro de dépôt international: PCT/EP2024/060358
(87) Numéro de publication internationale: WO 2024/218118

(56) Documents cités:
- FR-A1- 3 109 436
- US-A1- 2020 218 271
- US-A1- 2021 103 295
- US-B2- 11 527 165
- GARDI ALESSANDRO ET AL: "4-dimensional trajectory generation algorithms for RPAS Mission Management Systems", 2015 INTERNATIONAL CONFERENCE ON UNMANNED AIRCRAFT SYSTEMS (ICUAS), IEEE, 9 June 2015 (2015-06-09), pages 386 - 394, XP033171535, DOI: 10.1109/ICUAS.2015.7152314

## Description

La présente invention concerne un procédé d'aide au pilotage d'un aéronef, via la surveillance d'au moins un critère opérationnel d'une mission de l'aéronef au cours de l'exécution de ladite mission, le procédé étant mis en œuvre par un dispositif électronique d'aide au pilotage.

L'invention concerne aussi un programme d'ordinateur comportant des instructions logicielles qui, lorsqu'elles sont exécutées par un ordinateur, mettent en œuvre un tel procédé d'aide au pilotage.

L'invention concerne également un dispositif électronique d'aide au pilotage via la surveillance d'au moins un tel critère opérationnel, et un aéronef comprenant un tel dispositif d'aide au pilotage.

L'invention concerne plus particulièrement un avion, tout en étant applicable à tout type d'aéronef, tel qu'un hélicoptère ou un drone.

L'invention concerne le domaine de l'aide au pilotage d'un aéronef, notamment afin de diminuer la charge cognitive pour le pilote de l'aéronef lors de l'exécution d'une mission de l'aéronef.

On connaît du document FR 3 109 436 A1 un système d'aide à la décision pour aéronef qui acquiert des images géo-référencées (météo, zones de menace, incertitude) et des données contextuelles (carburant, équipements, comptage d'entités) et utilise un algorithme d'intelligence artificielle pour générer une liste d'actions recommandées (cap, vitesse, altitude, utilisation de capteurs).

On connait du document FR 3 111 210 B1 un système et un procédé pour un dialogue homme-machine amélioré, comprenant des traductions bidirectionnelles entre un utilisateur, tel que le pilote, et l'aéronef, notamment par la traduction, via un traducteur descendant, de commandes par l'homme sous forme manipulable pour la machine, et inversement par la traduction, via un traducteur ascendant, de résultats produits par la machine sous forme intelligible par l'homme. Ce document décrit également l'affichage de parties de raisonnements intermédiaires effectués par la machine, pour fournir une explicitation de causes à l'utilisateur.

Toutefois, avec de tels systèmes et procédés, la charge cognitive pour le pilote de l'aéronef reste parfois relativement importante.

Le but de l'invention est alors de proposer un procédé, et un dispositif électronique associé, d'aide au pilotage d'un aéronef qui permettent de diminuer davantage la charge cognitive pour le pilote de l'aéronef.

A cet effet, l'invention a pour objet un procédé d'aide au pilotage d'un aéronef par un pilote, via la surveillance d'au moins un critère opérationnel d'une mission de l'aéronef au cours de l'exécution de ladite mission,
le procédé étant mis en œuvre par un dispositif électronique d'aide au pilotage et comprenant, pour chaque critère opérationnel, les étapes suivantes :
- détermination d'une valeur de chaque grandeur caractéristique d'un ensemble de grandeur(s) caractéristique(s) associé audit critère opérationnel, l'ensemble de grandeur(s) caractéristique(s) étant spécifique à chaque critère opérationnel et prédéfini pour chaque critère opérationnel, chaque grandeur caractéristique étant déterminée à partir d'au moins une variable avionique, chaque variable avionique étant acquise depuis une source choisie parmi un système avionique, un capteur et une base de données ;
- estimation d'une valeur du critère opérationnel à partir de chaque valeur déterminée de grandeur caractéristique associée audit critère opérationnel et via la mise en œuvre d'un algorithme d'intelligence artificielle ;
- calcul d'un écart entre la valeur estimée du critère opérationnel et une valeur souhaitée dudit critère opérationnel, et d'une grandeur caractéristique, dite grandeur causale, qui est la principale cause dudit écart, ladite grandeur causale étant calculée via l'algorithme d'intelligence artificielle ;
- si l'écart calculé est supérieur à un seuil prédéfini, réalisation d'au moins une action choisie parmi le groupe consistant en : affichage, sur un système d'affichage, de la valeur estimée du critère opérationnel, de l'écart calculé et d'une indication de la grandeur causale ; émission d'une alerte en fonction de l'écart calculé ; et génération d'une instruction de commande d'un système avionique en fonction de la valeur estimée du critère opérationnel.

Le procédé d'aide au pilotage selon l'invention permet alors d'aider le pilote à évaluer les chances de réussite de la mission de l'aéronef ou des besoins de replanification de celle-ci, en estimant la valeur de chaque critère opérationnel, puis en affichant la valeur estimée de chaque critère opérationnel, et/ou en émettant une alerte en fonction de la valeur estimée de chaque critère opérationnel.

Le procédé d'aide au pilotage selon l'invention permet alors d'apporter une aide significative au pilote et de réduire sa charge cognitive nécessaire pour effectuer un diagnostic sur les chances de succès de la mission. De par le calcul régulier de l'écart entre la valeur estimée du critère opérationnel et une valeur souhaitée dudit critère opérationnel, le procédé d'aide au pilotage selon l'invention assure, en d'autres termes, une fonction d'ange gardien pour le pilotage de l'aéronef, notamment en attirant l'attention pour l'utilisateur, tel qu'un membre de l'équipage de l'aéronef, sous forme d'une alerte visuelle et/ou sonore si l'écart calculé est supérieur au seuil prédéfini.

Le procédé d'aide au pilotage selon l'invention permet aussi de fournir à l'utilisateur une indication quant à la grandeur caractéristique qui est la principale cause dudit écart, également appelée grandeur causale, c'est-à-dire celle qui, parmi l'ensemble de grandeur(s) caractéristique(s) associé audit critère opérationnel, est principalement à l'origine de cet écart, ou en d'autres termes est la principale source de cet écart. Ceci permet alors de mieux expliquer à l'utilisateur quelle est la cause de l'écart signalé, et alors de réduire sa charge cognitive nécessaire pour savoir comment réagir afin de limiter cet écart. Autrement dit, l'algorithme d'intelligence artificielle utilisé pour identifier la grandeur causale permet de rendre le diagnostic effectué plus intelligible pour l'utilisateur.

De préférence, pour chaque critère opérationnel, l'ensemble de grandeur(s) caractéristique(s) associé audit critère opérationnel est consultable et modifiable par un utilisateur, et cette aide au pilotage est alors adaptable par et pour l'utilisateur.

De préférence encore, l'algorithme d'intelligence artificielle mis en œuvre pour estimer la valeur du critère opérationnel comporte un arbre de décision à logique floue, ce qui permet de rendre le diagnostic effectué encore plus intelligible pour l'utilisateur.

De préférence encore, le procédé d'aide au pilotage selon l'invention permet d'aider le pilote à rechercher les symptômes d'une situation via la surveillance de plusieurs critères opérationnels parmi la sécurité, la ponctualité, le confort et l'écologie ; et de prendre en compte les conséquences d'une évolution du contexte, telle que la modification d'un environnement de l'aéronef, le changement d'une intention du pilote pour au moins un critère opérationnel, et une action du pilote différente d'une action prévue. Le procédé d'aide au pilotage selon l'invention permet alors à l'utilisateur de mieux évaluer l'impact de cette évolution du contexte par rapport à une performance initialement définie, c'est-à-dire par rapport à la valeur souhaitée de chaque critère opérationnel.

Suivant d'autres aspects avantageux de l'invention, le procédé d'aide au pilotage comprend une ou plusieurs des caractéristiques suivantes, prises isolément ou suivant toutes les combinaisons techniquement possibles :
- le procédé comprend en outre la détection d'au moins une évolution parmi le groupe consistant : modification d'un environnement de l'aéronef, changement de la valeur souhaitée d'un critère opérationnel respectif, et action du pilote différente d'une action prévue ; les étapes de détermination, d'estimation et de calcul étant alors mises en œuvre à nouveau suite à cette détection et en fonction de l'au moins une évolution détectée ;
- les étapes de détermination, d'estimation et de calcul sont réitérées régulièrement,

les étapes de détermination, d'estimation et de calcul étant de préférence réitérées périodiquement,
la période entre deux itérations successives des étapes de détermination, d'estimation et de calcul étant de préférence encore inférieure à 10 secondes ;
   - pour chaque critère opérationnel, l'ensemble de grandeur(s) caractéristique(s) associé audit critère opérationnel et/ou la valeur souhaitée dudit critère opérationnel sont consultables et modifiables par un utilisateur ;
   - plusieurs critères opérationnels sont surveillés ;
les critères opérationnels étant de préférence surveillés simultanément ;
   - chaque critère opérationnel est choisi parmi le groupe consistant en : sécurité, ponctualité, confort, et écologie ;
si plusieurs critères opérationnels sont surveillés, les critères opérationnels sont de préférence tous les critères opérationnels du groupe consistant en : sécurité, ponctualité, confort, et écologie ;
   - l'ensemble de grandeur(s) caractéristique(s) associé à la sécurité comporte : une portance de l'aéronef, un ratio entre quantité de carburant disponible et quantité de carburant nécessaire, et un indicateur quantifiant le respect par l'aéronef d'un plan de vol ;
   - l'ensemble de grandeur(s) caractéristique(s) associé à la ponctualité comporte : un indicateur quantifiant un retard de l'aéronef à l'arrivée, un ratio en un nombre de passagers ayant ratés une correspondance à l'arrivée et un nombre total de passagers du vol en retard, un indicateur quantifiant un retard d'un vol suivant de l'aéronef dû au retard du vol courant de l'aéronef ;
   - l'ensemble de grandeur(s) caractéristique(s) associé au confort comporte : un indicateur de retard au décollage, un nombre d'accélération(s) verticale(s) supérieure(s) à un seuil prédéfini au cours du vol et une durée cumulée d'accélération(s) verticale(s) supérieure(s) à un seuil prédéfini au cours du vol ;
   - l'ensemble de grandeur(s) caractéristique(s) associé à l'écologie comporte : une quantité d'émission de dioxyde de carbone au cours du vol, un indicateur d'utilisation de courants d'air favorables pour modifier la trajectoire de l'aéronef par rapport à une trajectoire initialement prévue, un niveau de bruit généré au sol lors de l'atterrissage, un ratio entre une quantité de dioxyde de carbone émise au cours du vol et un nombre de passagers transportés ;
   - l'algorithme d'intelligence artificielle comporte un arbre de décision à logique floue,
l'arbre de décision à logique floue incluant de préférence au moins un système d'inférence flou, chaque système d'inférence flou étant configuré pour recevoir en entrée au moins une valeur déterminée de grandeur caractéristique et pour délivrer en sortie une valeur unitaire d'évaluation ; pour chaque système d'inférence flou, une correspondance entre entrée(s) et sortie étant établie par logique floue ; la valeur du critère opérationnel étant alors estimée à partir de la ou des valeurs unitaires d'évaluation calculées pour l'ensemble de grandeur(s) caractéristique(s) associé audit critère opérationnel ;
   - le procédé comprend en outre une étape préliminaire d'apprentissage de l'algorithme d'intelligence artificielle à partir de données d'apprentissage ;
l'apprentissage préliminaire de l'algorithme d'intelligence artificielle étant de préférence un apprentissage supervisé ;
si l'algorithme d'intelligence artificielle comporte un arbre de décision à logique floue, l'apprentissage préliminaire de l'arbre de décision à logique floue étant de préférence encore effectué via la mise en œuvre d'un algorithme génétique.

L'invention a aussi pour objet un programme d'ordinateur comportant des instructions logicielles qui, lorsqu'elles sont exécutées par un ordinateur, mettent en œuvre un procédé d'aide au pilotage, tel que défini ci-dessus.

L'invention a également pour objet un dispositif électronique d'aide au pilotage d'un aéronef par un pilote, via la surveillance d'au moins un critère opérationnel d'une mission de l'aéronef au cours de l'exécution de ladite mission, le dispositif comprenant :
- un module de détermination configuré pour déterminer, pour chaque critère opérationnel, une valeur de chaque grandeur caractéristique d'un ensemble de grandeur(s) caractéristique(s) associé audit critère opérationnel, l'ensemble de grandeur(s) caractéristique(s) étant spécifique à chaque critère opérationnel et prédéfini pour chaque critère opérationnel, chaque grandeur caractéristique étant déterminée à partir d'au moins une variable avionique, chaque variable avionique étant acquise depuis une source choisie parmi un système avionique, un capteur et une base de données ;
- un module d'estimation configuré pour estimer, pour chaque critère opérationnel, une valeur du critère opérationnel à partir de chaque valeur déterminée de grandeur caractéristique associée audit critère opérationnel et via la mise en œuvre d'un algorithme d'intelligence artificielle ;
- un module de calcul configuré pour calculer un écart entre la valeur estimée du critère opérationnel et une valeur souhaitée dudit critère opérationnel, et une grandeur caractéristique, dite grandeur causale, qui est la principale cause dudit écart, ladite grandeur causale étant calculée via l'algorithme d'intelligence artificielle ;
- un module de réalisation configuré pour, si l'écart calculé est supérieur à un seuil prédéfini, réaliser au moins une action choisie parmi le groupe consistant en : affichage, sur un système d'affichage, de la valeur estimée du critère opérationnel, de l'écart calculé et d'une indication de la grandeur causale , émission d'une alerte en fonction de l'écart calculé, et génération d'une instruction de commande d'un système avionique en fonction de la valeur estimée du critère opérationnel et de l'écart calculé.

L'invention a aussi pour objet un aéronef comprenant un dispositif électronique d'aide au pilotage d'un aéronef, le dispositif d'aide au pilotage étant tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un aéronef comprenant un dispositif électronique d'aide au pilotage selon l'invention, connecté à des systèmes avioniques, à un ou plusieurs capteurs, à une base de données, ainsi qu'à un système d'affichage ;
- la figure 2 est une représentation schématique d'un arbre de décision à logique floue inclus dans un algorithme d'intelligence artificielle, mis en œuvre par le dispositif d'aide au pilotage de la figure 1 pour estimer la valeur d'un critère opérationnel à partir de la valeur de chaque grandeur d'un ensemble de grandeur(s) caractéristique(s) associé audit critère opérationnel, le dispositif d'aide au pilotage permettant alors la surveillance d'au moins un critère opérationnel d'une mission de l'aéronef ; et
- la figure 3 est un organigramme d'un procédé d'aide au pilotage selon l'invention, le procédé étant mis en œuvre le dispositif d'aide au pilotage de la figure 1.

Dans la description, l'expression « sensiblement égal(e) à » désigne une relation d'égalité à plus ou moins 10 %, de préférence à plus ou moins 5 %.

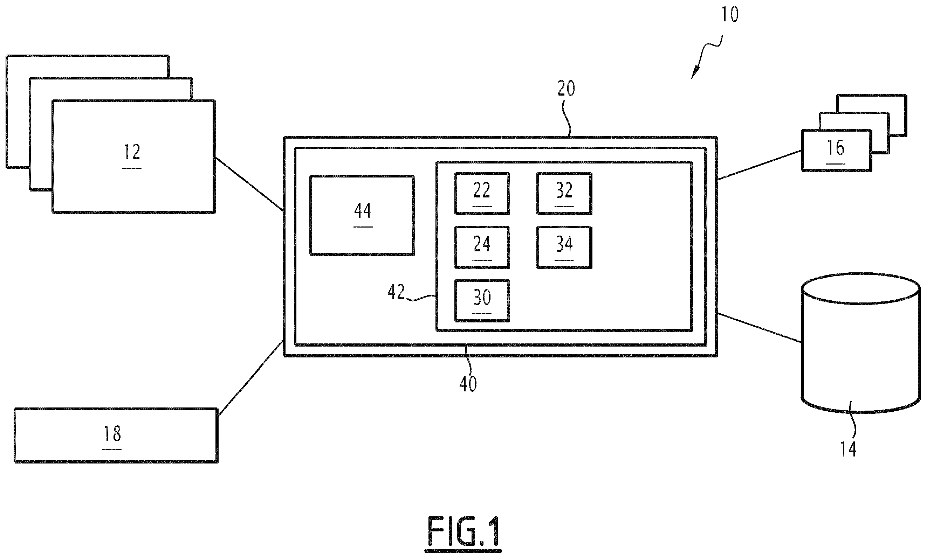

Sur la figure 1, un aéronef 10 comprend plusieurs systèmes avioniques 12, une ou plusieurs bases de données 14, plusieurs capteurs 16, un ou plusieurs systèmes d'affichage 18, et un dispositif électronique d'aide au pilotage 20 connecté aux systèmes avioniques 12, au(x) base(s) de données 14, aux capteurs 16 et au(x) système(s) d'affichage 18.

L'aéronef 10 est par exemple un avion, tel qu'un avion de ligne commerciale. En variante, l'aéronef 10 est un hélicoptère, un drone pilotable à distance par un pilote, ou encore un aéronef autonome sans opérateur. L'homme du métier observera que dans le cas où l'aéronef 10 est un aéronef autonome sans opérateur, il ne comprend de préférence pas de système d'affichage.

Chaque système avionique 12 est embarqué à bord de l'aéronef 10, est connu en soi, et est configuré pour mettre en œuvre une ou plusieurs fonctions avioniques respectives.

Chaque système avionique 12 est apte à transmettre au dispositif électronique d'aide au pilotage 20 différentes données avioniques, par exemple des données dites « aéronef », telles que la position, la vitesse, l'accélération, l'orientation, le cap ou encore l'altitude de l'aéronef 10, et/ou des données dites « navigation », telles qu'un plan de vol, une heure d'arrivée estimée, un nombre de passagers.

Chaque système avionique 12 est par exemple choisi parmi le groupe consistant en : un système de gestion du vol, également appelé FMS (de l'anglais *Flight Management System*) ; un système de guidage, ou FG (de l'anglais *Flight Guidance*) ; un système de commandes de vol, ou FCS (de l'anglais *Flight Control System*) ; un système de positionnement par satellite, tel qu'un système GPS (de l'anglais *Global Positioning System*) ; un système de référence inertielle, également appelé système IRS (de l'anglais *Inertial Reference System*) ; un système d'aide à l'atterrissage ILS (de l'anglais *Instrument Landing System*) ou un système d'aide à l'atterrissage MLS (de l'anglais *Microwave Landing System*) ; un système de prévention de sortie de piste actif, également appelé système ROPS (de l'anglais *Runway Overrun Prevention System*) ; et un radioaltimètre, également noté RA (de l'anglais *RadioAltimeter*).

Optionnellement, certains systèmes avioniques 12 sont également aptes à recevoir des consignes, ou encore des commandes, de la part du dispositif électronique d'aide au pilotage 20. Ces systèmes avioniques 12 aptes à recevoir des consignes sont par exemple :
- le système de commandes de vol, également noté FCS ou FBW (de l'anglais *Fly By Wire*), pour agir sur un ensemble de gouvernes et d'actionneurs de l'aéronef. Dans le cas d'un aéronef à voilure fixe, les gouvernes sont, par exemple, des ailerons, la gouverne de profondeur ou la gouverne de direction. Dans le cas d'un aéronef à voilure tournante, les gouvernes sont, par exemple, le pas collectif, le pas cyclique ou le pas du rotor de queue ;
- un système de contrôle moteur, également noté ECU (de l'anglais *Engine Control Unit*) pour faire varier l'énergie délivrée par un moteur de l'aéronef, tel qu'un réacteur, un turbopropulseur ou encore une turbine ;
- au moins un système de guidage, tel qu'un dispositif de pilotage automatique, également noté AFCS (de l'anglais *Auto-Flight Control System*), également appelé pilote automatique et noté PA ou AP (de l'anglais *Automatic Pilot*), ou encore tel que le système de gestion du vol de l'aéronef (FMS).

Chaque base de données 14 est optionnelle, connue en soi, est par exemple choisie parmi le groupe consistant en :
- une base de données de navigation, également appelée NAVDB (de l'anglais *NAVigation Data Base*), contenant notamment des données relatives à des espaces ou zones de vol interdits, des données relatives à des pistes d'atterrissage sur lesquelles l'aéronef 10 est susceptible d'atterrir, ces données étant typiquement une position d'un seuil de la piste d'atterrissage, une orientation de la piste d'atterrissage, une longueur de piste, une altitude ou un point de décision, etc ;
- une base de données d'élévations de terrain, contenant des informations relatives à la hauteur et à l'altitude de la surface terrestre ;
- une base de données des performances, également appelée PERFDB (de l'anglais *PERFormance Data Base*), contenant des informations sur les performances de l'aéronef 10, telles que la vitesse, la consommation de carburant, l'altitude, la portée, etc ;
- une base de données de maintenance, contenant des informations sur les réparations, les entretiens et les inspections effectuées sur l'aéronef ;
- une base de données des passagers, contenant des informations sur les passagers, telles que leur nom, leur âge, leur nationalité, leur numéro de passeport, etc ; et
- une base de données météorologiques, contenant des informations sur les conditions météorologiques, telles que la température, la pression, la vitesse et la direction du vent, la visibilité, etc. Ces données sont utilisées pour la planification des vols et pour la sécurité des passagers.

Ces bases de données sont typiquement interconnectées et alimentées au moins en partie par les capteurs 16.

Dans l'exemple de la figure 1, les bases de données 14 sont des bases de données externes au dispositif électronique d'aide au pilotage 20. En variante, non représentée, les bases de données 14 sont au moins en partie internes au dispositif électronique d'aide au pilotage 20.

Les capteurs 16 sont aptes à mesurer différentes grandeurs associées à l'aéronef 10 et/ou à l'environnement de l'aéronef 10, et comportent par exemple au moins un capteur parmi : un dispositif de télédétection par laser, plus connu sous le nom de lidar (de l'anglais *light detection and ranging*) ; un radar (de l'anglais *radio detection and ranging*) ; un laser (de l'anglais *light amplification by stimulated emission of radiation*) ; un télémètre ; un radioaltimètre ; un accéléromètre ; une centrale inertielle, également appelée IMU (de l'anglais *Inertial Measurement Unit*) ; un capteur à effet Doppler ; un capteur de positionnement par satellites, tel qu'un capteur GPS (de l'anglais *Global Positioning System*), un capteur Galileo, un capteur Glonass ; une ou plusieurs caméras stéréoscopiques ; et un capteur de données atmosphériques, telles que pression, température.

Chaque capteur électronique 16 est connu en soi, et les données mesurées par chaque capteur 16 sont destinées à être acquises par le dispositif électronique d'aide au pilotage 20, auquel il est connecté.

Le ou les systèmes d'affichage 18 sont, par exemple, un système d'affichage tête basse et/ou un système d'affichage tête haute, également appelé HUD (de l'anglais *Head-Up Display*). Le système d'affichage tête basse est, par exemple, un système d'affichage de données de navigation (de l'anglais *Navigation Display*). En variante ou en complément, le système d'affichage 18 est un système d'affichage déporté, en particulier un système d'affichage externe à l'aéronef 10, tel qu'un système d'affichage dans une station sol, ou encore la télécommande ou les lunettes de vision d'un opérateur drone.

Le dispositif électronique d'aide au pilotage 20 est destiné à être embarqué à bord de l'aéronef 10, lorsque l'aéronef 10 est un avion ou un hélicoptère. En variante, le dispositif électronique d'aide au pilotage 20 est destiné à être installé au sol, tout en étant relié aux systèmes avioniques 12 embarqués à bord de l'aéronef 10, lorsque l'aéronef 10 est un drone pilotable à distance par un pilote ou encore un aéronef autonome sans opérateur.

Le dispositif électronique d'aide au pilotage 20 est destiné à apporter une aide au pilote de l'aéronef 10, en effectuant une surveillance d'au moins un critère opérationnel d'une mission de l'aéronef 10 au cours de l'exécution de ladite mission, ce qui permet alors de réduire la charge cognitive pour le pilote. Cette surveillance est effectuée de préférence régulièrement, en estimant régulièrement une nouvelle valeur de chaque critère opérationnel surveillé. Chaque critère opérationnel est par exemple choisi parmi le groupe consistant en : sécurité, ponctualité, confort, et écologie.

En complément, le dispositif électronique d'aide au pilotage 20 est configuré pour effectuer la surveillance de plusieurs critères opérationnels, notamment de plusieurs critères opérationnels parmi les critères opérationnels précités, et par exemple de tous les critères opérationnels parmi le groupe consistant en : la sécurité, la ponctualité, le confort et l'écologie. Selon ce complément, le dispositif électronique d'aide au pilotage 20 est de préférence configuré pour effectuer simultanément cette surveillance de plusieurs critères opérationnels. Autrement dit, la pluralité de critères opérationnels est alors surveillée de manière simultanée, lesdits critères opérationnels étant alors surveillés en parallèle les uns des autres.

Dans l'exemple de la figure 1, le dispositif électronique d'aide au pilotage 20 est un dispositif électronique autonome, externe aux systèmes avioniques 12, au(x) base(s) de données 14, aux capteurs 16 et au(x) système(s) d'affichage 18. Autrement dit, dans cet exemple, le dispositif d'aide au pilotage 20 est distinct et disjoint de chacun des systèmes avioniques 12. En variante non représentée, le dispositif électronique d'aide au pilotage 20 est intégré à l'un des systèmes avioniques 12, c'est-à-dire inclus dans l'un des systèmes avioniques 12, tel que le système de gestion de vol ou FMS.

Le dispositif électronique d'aide au pilotage 20 comprend un module 22 de détermination, pour chaque critère opérationnel, d'une valeur de chaque grandeur caractéristique K₁, K₂, K₃, K₄, K₅ d'un ensemble de grandeur(s) caractéristique(s) associé audit critère opérationnel. Le module de détermination 22 est connecté à au moins l'un des systèmes avioniques 12, des bases de données 14, et des capteurs 16 pour acquérir les informations et/ou valeurs mesurées nécessaires à la détermination de chaque valeur de grandeur caractéristique K₁, K₂, K₃, K₄, K₅.

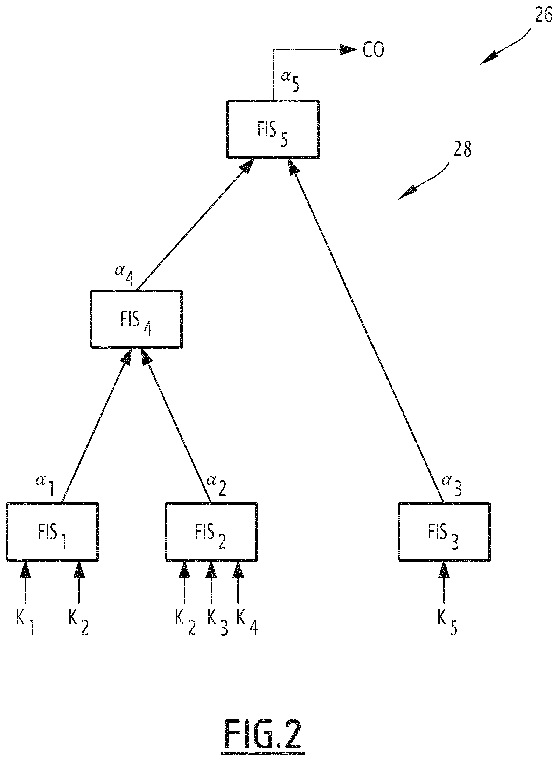

Le dispositif électronique d'aide au pilotage 20 comprend également un module 24 d'estimation d'une valeur de chaque critère opérationnel, à partir de chaque valeur déterminée de grandeur caractéristique K₁, K₂, K₃, K₄, K₅ associée audit critère opérationnel et via la mise en œuvre d'un algorithme d'intelligence artificielle 26. L'algorithme d'intelligence artificielle 26 comporte, par exemple, un arbre de décision à logique floue 28, visible à la figure 2. Le module d'estimation 24 est connecté en sortie du module de détermination 22.

Le dispositif électronique d'aide au pilotage 20 comprend aussi un module 30 de calcul d'un écart entre la valeur estimée du critère opérationnel et une valeur souhaitée dudit critère opérationnel, et d'une grandeur caractéristique, dite grandeur causale, qui est la principale cause dudit écart. Le module de calcul 30 est connecté en sortie du module d'estimation 24.

Le dispositif électronique d'aide au pilotage 20 comprend un module 32 de réalisation, si l'écart calculé est supérieur à un seuil prédéfini, d'au moins une action parmi l'affichage de la valeur estimée du critère opérationnel, de l'écart calculé et d'une indication de la grandeur causale ; l'émission d'une alerte en fonction de l'écart calculé ; et la génération d'une instruction de commande d'un système avionique en fonction de la valeur estimée du critère opérationnel et de l'écart calculé. Le module de réalisation 32 est connecté en sortie du module de calcul 30.

Avantageusement, le dispositif électronique d'aide au pilotage 20 est configuré pour lancer régulièrement, par exemple périodiquement, la mise en œuvre des modules de détermination 22, d'estimation 24 et de calcul 30, afin d'estimer régulièrement une nouvelle valeur de chaque critère opérationnel CO surveillé, et de calculer régulièrement un nouvel écart entre la nouvelle valeur estimée et la valeur souhaitée de chaque critère opérationnel CO surveillé.

Lorsque cette mise en œuvre des modules de détermination 22, d'estimation 24 et de calcul 30 est réitérée périodiquement, la période entre deux itérations successives des mises en œuvre des modules de détermination 22, d'estimation 24 et de calcul 30 est typiquement inférieure à 10 secondes, de préférence inférieure à 5 secondes, et de préférence encore inférieure à 1 secondes.

En complément facultatif, le dispositif électronique d'aide au pilotage 20 comprend en outre un module 34 de détection d'au moins une évolution parmi une modification d'un environnement de l'aéronef 10, un changement de la valeur souhaitée d'un critère opérationnel CO respectif et/ou une action du pilote différente d'une action prévue. Selon ce complément facultatif, le module de détection 34 est alors configuré pour, en cas de détection de l'au moins une évolution, lancer à nouveau la mise en œuvre des modules de détermination 22, d'estimation 24 et de calcul 30 afin d'estimer une nouvelle valeur de chaque critère opérationnel CO surveillé et de calculer un nouvel écart, pour chaque critère opérationnel CO surveillé, entre la nouvelle valeur estimée et la valeur souhaitée dudit critère opérationnel CO.

Dans l'exemple de la figure 1, le dispositif électronique d'aide au pilotage 20 comprend une unité de traitement d'informations 40 formée par exemple d'une mémoire 42 et d'un processeur 44 associé à la mémoire 42.

Dans l'exemple de la figure 1, le module de détermination 22, le module de d'estimation 24, le module de calcul 30 et le module de réalisation 32, ainsi qu'en complément facultatif le module de détection 34, sont réalisés chacun sous forme d'un logiciel, ou d'une brique logicielle, exécutable par le processeur 44. La mémoire 42 du dispositif électronique d'aide au pilotage 20 est alors apte à stocker un logiciel de détermination, pour chaque critère opérationnel, d'une valeur de chaque grandeur caractéristique ; un logiciel d'estimation d'une valeur de chaque critère opérationnel ; un logiciel de calcul de la grandeur causale et de l'écart entre les valeurs estimée et souhaitée du critère opérationnel ; et un logiciel de réalisation d'au moins une action parmi l'affichage de la valeur estimée du critère opérationnel, de l'écart calculé et de l'indication de la grandeur causale, l'émission de l'alerte en fonction de l'écart calculé et la génération de l'instruction de commande au système avionique. En complément facultatif, la mémoire 42 du dispositif électronique d'aide pilotage 20 est alors apte à stocker un logiciel de détection de l'au moins une évolution. Le processeur 44 est alors apte à exécuter chacun des logiciels parmi le logiciel de détermination, le logiciel d'estimation, le logiciel de calcul et le logiciel de réalisation, ainsi qu'en complément facultatif le logiciel de détection.

Lorsqu'en variante, non représentée, la base de données 14 est une base de données interne du dispositif électronique d'aide au pilotage 20, elle est typiquement apte à être stockée dans une mémoire du dispositif électronique d'aide au pilotage 20, telle que la mémoire 42.

En variante non représentée, le module de détermination 22, le module de d'estimation 24, le module de calcul 30 et le module de réalisation 32, ainsi qu'en complément facultatif le module de détection 34, sont réalisés chacun sous forme d'un composant logique programmable, tel qu'un FPGA (de l'anglais *Field Programmable Gate Array*) ; ou encore sous forme d'un circuit intégré dédié, tel qu'un ASIC (de l'anglais *Application Specific Integrated Circuit).*

Lorsque le dispositif électronique d'aide au pilotage 20 est réalisé sous forme d'un ou plusieurs logiciels, c'est-à-dire sous forme d'un programme ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le module de détermination 22 est configuré pour déterminer, pour chaque critère opérationnel CO, une valeur de chaque grandeur caractéristique K₁, K₂, K₃, K₄, K₅ d'un ensemble de grandeurs caractéristiques associé audit critère opérationnel CO. L'ensemble de grandeurs caractéristiques est spécifique à chaque critère opérationnel CO et prédéfini pour chaque critère opérationnel CO.

Avantageusement, pour chaque critère opérationnel CO, l'ensemble de grandeur(s) caractéristique(s) associé audit critère opérationnel CO et/ou la valeur souhaitée dudit critère opérationnel CO sont consultables et modifiables par un utilisateur.

L'ensemble de grandeur(s) caractéristique(s) K₁, K₂, K₃, K₄, K₅ associé à la sécurité comporte, par exemple, une portance de l'aéronef 10, un ratio entre quantité de carburant disponible et quantité de carburant nécessaire, et un indicateur quantifiant le respect par l'aéronef 10 d'un plan de vol.

L'ensemble de grandeur(s) caractéristique(s) K₁, K₂, K₃, K₄, K₅ associé à la ponctualité comporte typiquement un indicateur quantifiant un retard de l'aéronef 10 à l'arrivée, un ratio en un nombre de passagers ayant ratés une correspondance à l'arrivée et un nombre total de passagers du vol en retard, un indicateur quantifiant un retard d'un vol suivant de l'aéronef 10 dû au retard du vol courant de l'aéronef 10.

L'ensemble de grandeur(s) caractéristique(s) K₁, K₂, K₃, K₄, K₅ associé au confort comporte, par exemple, un indicateur de retard au décollage, un nombre d'accélération(s) verticale(s) supérieure(s) à un seuil prédéfini au cours du vol et une durée cumulée d'accélération(s) verticale(s) supérieure(s) à un seuil prédéfini au cours du vol.

L'ensemble de grandeur(s) caractéristique(s) K₁, K₂, K₃, K₄, K₅ associé à l'écologie comporte typiquement une quantité d'émission de dioxyde de carbone au cours du vol, un indicateur d'utilisation de courants d'air favorables pour modifier la trajectoire de l'aéronef 10 par rapport à une trajectoire initialement prévue, un niveau de bruit généré au sol lors de l'atterrissage, un ratio entre une quantité de dioxyde de carbone émise au cours du vol et un nombre de passagers transportés.

Chaque grandeur caractéristique K₁, K₂, K₃, K₄, K₅ est déterminée à partir d'au moins une variable avionique, chaque variable avionique étant acquise depuis une source choisie parmi les systèmes avioniques 12, la ou les bases de données 14 et les capteurs 16. La détermination de chaque grandeur caractéristique K₁, K₂, K₃, K₄, K₅ à partir d'au moins une variable avionique est connue en soi.

Le module d'estimation 24 est configuré pour estimer, pour chaque critère opérationnel CO, une valeur du critère opérationnel CO à partir de chaque valeur déterminée de grandeur caractéristique K₁, K₂, K₃, K₄, K₅ associée audit critère opérationnel CO et via la mise en œuvre de l'algorithme d'intelligence artificielle 26, et par exemple de l'arbre de décision à logique floue 28.

L'arbre de décision à logique floue 28, également appelé GFT (de l'anglais *Generalized Fuzzy Tree*) permet de prendre des décisions également avec des données incertaines ou imprécises. Contrairement aux arbres de décision traditionnels qui utilisent des règles binaires pour prendre des décisions (vrai/faux), l'arbre de décision à logique floue 28 utilise des variables linguistiques pour représenter des concepts tels que "très probable" ou "un peu probable".

L'arbre de décision à logique floue 28 fonctionne en évaluant les variables d'entrée, à savoir la ou les valeurs déterminées de grandeur(s) caractéristique(s) K₁, K₂, K₃, K₄, K₅ associée(s) au critère opérationnel CO respectif, ces variables d'entrée étant des données quantitatives ou qualitatives, puis en les convertissant en valeurs degré d'appartenance pour les variables linguistiques correspondantes. Par exemple, si la variable d'entrée est l'indicateur quantifiant le respect du plan de vol ou encore par exemple indicateur de retard au décollage, la valeur de cette variable est traduite en degré d'appartenance à des variables linguistiques, telles que "faible", "moyen" ou "élevé".

L'arbre de décision à logique floue 28 utilise ensuite des règles floues pour évaluer ces degrés d'appartenance et prendre des décisions. Ces règles sont généralement définies par des experts dans le domaine ou par des données historiques. Les règles floues sont typiquement représentées sous la forme de "si...alors" avec des variables linguistiques.

En complément facultatif, l'arbre de décision à logique floue 28 utilise des méthodes d'inférence pour calculer la sortie finale en combinant les résultats de plusieurs règles. Une telle méthode d'inférence est par exemple la méthode de Mamdani, qui utilise la moyenne pondérée des règles pour calculer la sortie.

L'arbre de décision à logique floue 28 permet alors d'estimer la valeur du critère opérationnel CO correspondant dans des environnements incertains ou imprécis en utilisant des concepts linguistiques et des règles floues, plutôt que des règles binaires rigides.

Avantageusement, l'arbre de décision à logique floue 28 inclut au moins un système d'inférence flou FIS₁, FIS₂, FIS₃, FIS₄, FIS₅ (FIS de l'anglais *Fuzzy Inference System*), chaque système d'inférence flou FIS₁, FIS₂, FIS₃, FIS₄, FIS₅ étant configuré pour recevoir en entrée au moins une valeur déterminée de grandeur caractéristique K₁, K₂, K₃, K₄, K₅ et pour délivrer en sortie une valeur unitaire d'évaluation ; pour chaque système d'inférence flou FIS₁, FIS₂, FIS₃, FIS₄, FIS₅, une correspondance entre entrée(s) et sortie étant établie par logique floue ; la valeur du critère opérationnel CO étant alors estimée à partir de la ou des valeurs unitaires d'évaluation calculées pour l'ensemble de grandeur(s) caractéristique(s) associé audit critère opérationnel CO.

Dans l'exemple de la figure 2, l'arbre de décision à logique floue 28 est alors représenté sous forme d'un graphe de systèmes d'inférence flou FIS₁, FIS₂, FIS₃, FIS₄, FIS₅, chacun avec un coefficient de pondération α₁, α₂, α₃, α₄, α₅ associé. Dans cet exemple, l'arbre de décision à logique floue 28 comporte cinq systèmes d'inférence flou FIS₁, FIS₂, FIS₃, FIS₄, FIS₅, à savoir un premier système d'inférence flou FIS, avec un premier coefficient de pondération α₁, un deuxième système d'inférence flou FIS₂ avec un deuxième coefficient de pondération α₂, un troisième système d'inférence flou FIS₃ avec un troisième coefficient de pondération α₃, un quatrième système d'inférence flou FIS₄ avec un quatrième coefficient de pondération α₄ et un cinquième système d'inférence flou FIS₅ avec un coefficient de pondération α₅.

Dans cet exemple, les systèmes d'inférence flous sont répartis sur trois niveaux, à savoir niveau inférieur correspondant aux premier, deuxième et troisième systèmes d'inférence flou FIS₁, FIS₂, FIS₃ recevant les variables d'entrée, c'est-à-dire les valeurs déterminées de l'ensemble de grandeur(s) caractéristique(s) K₁, K₂, K₃, K₄, K₅ associé au critère opérationnel CO correspondant ; un niveau intermédiaire correspondant au quatrième système d'inférence flou FIS₄ connecté en sortie des premier et deuxième systèmes d'inférence flou FIS₁, FIS₂ ; et un niveau supérieur correspondant au cinquième système d'inférence flou FIS₅ connecté en sortie des troisième et quatrième systèmes d'inférence flou FIS₃, FIS₄, le cinquième système d'inférence flou FIS₅ étant alors configuré dans cet exemple pour délivrer à sa sortie la valeur estimée du critère opérationnel CO.

Chaque système d'inférence flou FIS₁, FIS₂, FIS₃, FIS₄, FIS₅ est une structure permettant de formaliser les règles floues qui gouvernent la prise de décision de l'arbre de décision 28. Chaque système d'inférence flou FIS₁, FIS₂, FIS₃, FIS₄, FIS₅ comprend par exemple une ou plusieurs variables d'entrée, chacune typiquement divisée en un certain nombre de catégories linguistiques, appelées "ensembles flous" ; une ou plusieurs fonctions d'appartenance, à savoir des fonctions mathématiques assignant une valeur de degré d'appartenance à chaque entrée pour chaque ensemble flou ; une ou plusieurs règles floues gouvernant la prise de décision, typiquement de la forme "Si l'entrée est dans l'ensemble flou A ET l'entrée est dans l'ensemble flou B, alors la sortie est dans l'ensemble flou C" ; une ou plusieurs fonctions d'inférence combinant les degrés d'appartenance des ensembles flous d'entrée pour déterminer les degrés d'appartenance des ensembles flous de sortie ; une ou plusieurs variables de sortie représentant la décision finale, chacune typiquement divisée en un certain nombre ensembles flous, de manière analogue aux variables d'entrées ; et une ou plusieurs fonctions d'agrégation combinant les degrés d'appartenance des ensembles flous de sortie pour déterminer la valeur de sortie finale. La fonction d'agrégation est par exemple une somme pondérée.

L'arbre de décision à logique floue 28 a été préalablement entrainé lors d'une étape préliminaire d'apprentissage de l'algorithme d'intelligence artificielle 26 à partir de données d'apprentissage.

Avantageusement, l'apprentissage préliminaire de l'algorithme d'intelligence artificielle 26 est un apprentissage supervisé. L'homme du métier observera que l'apprentissage supervisé n'est pas direct. En effet, l'opérateur annote un résultat tandis que l'algorithme d'intelligence artificielle 26, en particulier l'arbre de décision à logique floue 28, prend des grandeurs caractéristiques en entrée. Pour construire la base d'apprentissage, il faut donc fournir un ensemble de résultats contextualisés ; puis pour chaque résultat de cet ensemble, évaluer les grandeurs caractéristiques ; et enfin pour chaque résultat de cet ensemble le faire annoter par un utilisateur dans la sémantique opérationnelle.

L'apprentissage supervisé de l'arbre de décision à logique floue 28 commence par la collecte de données d'apprentissage d'entrée et de sortie. Les données d'entrée sont typiquement des caractéristiques ou des attributs qui décrivent une situation ou un problème, tandis que les données de sortie représentent les résultats attendus pour chaque situation ou problème. Les règles logiques de l'arbre de décision à logique floue 28 sont alors construites à partir des données d'apprentissage.

L'apprentissage préliminaire de l'arbre de décision à logique floue 28 est de préférence effectué via la mise en œuvre d'un algorithme génétique. Pour ledit apprentissage par algorithme génétique, un ensemble d'individus est créé, chaque individu représentant un arbre de décision à logique floue potentiel. Chaque arbre de décision est évalué en fonction de sa précision dans la prise de décisions, qui est mesurée à l'aide d'une fonction d'activité (de l'anglais *fitness*). Les individus ayant une fonction d'activité plus élevée sont sélectionnés pour se reproduire et créer des descendants. La reproduction implique la combinaison de caractéristiques des parents, tout en ajoutant une certaine variation pour encourager l'exploration de nouvelles solutions. Les descendants créés sont ensuite soumis à une évaluation de la fonction d'activité pour déterminer s'ils sont meilleurs ou pires que leurs parents. Les meilleurs individus sont conservés pour la prochaine génération, tandis que les moins performants sont éliminés. Ce processus se répète pendant plusieurs générations, jusqu'à ce qu'un arbre de décision à logique floue satisfaisant soit trouvé. Une fois que l'algorithme génétique a convergé vers une solution, l'arbre de décision à logique floue 28 ainsi entrainé est utilisé pour prendre des décisions à partir de nouvelles données d'entrée. La fonction d'activité calcule par exemple la moyenne des écarts entre la sortie du modèle sous apprentissage et une annotation sémantique opérationnelle, typiquement de haut niveau. Cette fonction d'activité doit être minimisée lors du processus d'apprentissage.

Le module de calcul 30 est configuré pour calculer un écart entre la valeur estimée du critère opérationnel CO et une valeur souhaitée dudit critère opérationnel CO, et une grandeur caractéristique, dite grandeur causale, qui est la principale cause dudit écart.

L'écart calculé est par exemple la différence de la valeur souhaitée moins la valeur estimée du critère opérationnel CO, l'écart calculé étant alors un nombre relatif. En variante, écart calculé est la différence en valeur absolue entre la valeur estimée et la valeur souhaitée du critère opérationnel CO, et l'écart calculé est alors un nombre positif.

La grandeur causale est calculée via l'arbre de décision à logique floue 28, ceci en tenant compte du coefficient de pondération α₁, α₂, α₃, α₄, α₅ associé respectivement à chaque système d'inférence flou FIS₁, FIS₂, FIS₃, FIS₄, FIS₅.

Le module de réalisation 32 est configuré pour, si l'écart calculé est supérieur à un seuil prédéfini, réaliser au moins une action choisie parmi le groupe consistant en : affichage, sur un système d'affichage 18, de la valeur estimée du critère opérationnel CO, de l'écart calculé et d'une indication de la grandeur causale , émission d'une alerte en fonction de l'écart calculé, et génération d'une instruction de commande d'un système avionique 12 en fonction de la valeur estimée du critère opérationnel CO et de l'écart calculé.

En complément facultatif, le module de réalisation 32 est configuré pour afficher la valeur estimée du critère opérationnel et l'écart calculé quelle que soit la valeur de l'écart calculé, en particulier également si l'écart calculé est inférieur ou égal au seuil prédéfini.

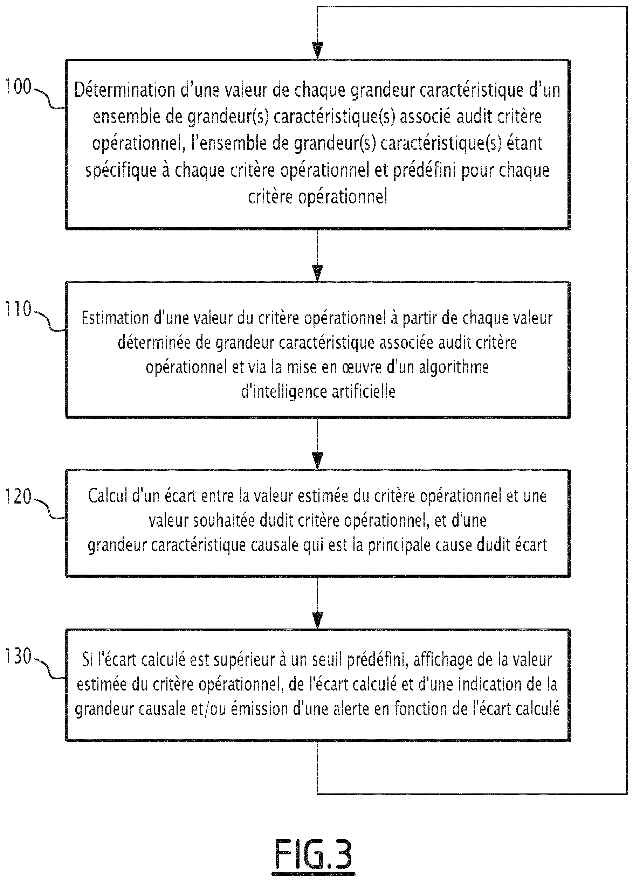

Le fonctionnement du dispositif électronique d'aide au pilotage 20 va être à présent décrit en regard de la figure 3 représentant un organigramme du procédé d'aide au pilotage selon l'invention, mis en œuvre par le dispositif électronique d'aide au pilotage 20.

Lors d'une étape préliminaire d'apprentissage, non représentée, l'algorithme d'intelligence artificielle 26 est entraîné à partir des données d'apprentissage, de préférence de manière supervisée, et de préférence encore via la mise en œuvre d'un algorithme génétique, comme décrit ci-dessus.

Après cet entraînement préliminaire de l'algorithme d'intelligence artificielle 26, lors d'une étape initiale 100, le dispositif électronique d'aide au pilotage 20 détermine, via son module de détermination 22 et pour chaque critère opérationnel CO, la valeur de chaque grandeur caractéristique K₁, K₂, K₃, K₄, K₅ de l'ensemble de grandeurs caractéristiques associé audit critère opérationnel CO. Chaque grandeur caractéristique K₁, K₂, K₃, K₄, K₅ est alors déterminée de manière connue en soi à partir d'au moins une variable avionique, chacune étant acquise depuis une source choisie parmi les systèmes avioniques 12, la ou les bases de données 14 et les capteurs 16.

À l'issue de l'étape de détermination 100, le dispositif d'aide au pilotage 20 passe à l'étape suivante 110 lors de laquelle il estime, via son module d'estimation 24 mettant en œuvre l'algorithme d'intelligence artificielle 26, la valeur du critère opérationnel CO à partir de chaque valeur déterminée de grandeur caractéristique K₁, K₂, K₃, K₄, K₅ associée audit critère opérationnel CO. Cette estimation est plus particulièrement effectuée via l'arbre de décision à logique floue 28, comme décrit précédemment.

Après l'étape d'estimation 110, le dispositif d'aide au pilotage 20 calcule, lors de l'étape suivante 120 et via son module de calcul 30, l'écart, tel que différence relative ou différence en valeur absolue, entre les valeurs estimée et souhaitée du critère opérationnel CO.

À l'issue de l'étape de calcul 120, si l'écart calculé est supérieur au seuil prédéfini, le dispositif d'aide au pilotage 20 réalise, lors de l'étape suivante 130 et via son module de réalisation 32, l'affichage d'informations pertinentes sur le système d'affichage 18, notamment la valeur estimée du critère opérationnel CO, l'écart calculé et l'indication de l'éventuelle grandeur causale ; et/ou l'émission de l'alerte en fonction de l'écart calculé ; voire la génération de l'instruction de commande du système avionique 12 correspondant en fonction de la valeur estimée du critère opérationnel CO et de l'écart calculé.

L'homme du métier observera qu'en complément facultatif, la valeur estimée du critère opérationnel et l'écart calculé sont affichés sur le système d'affichage 18 lors de l'étape de réalisation 130 quelle que soit la valeur de l'écart calculé, et notamment également si l'écart calculé est inférieur ou égal au seuil prédéfini.

Avantageusement, en complément facultatif, un indicateur de tendance est également affiché afin d'indiquer à l'opérateur dans quelle sens a évolué la valeur estimée du critère opérationnel CO, par rapport à une précédente valeur estimée dudit critère opérationnel CO.

Les étapes de détermination 100, d'estimation 110 et de calcul 120 sont réitérées régulièrement, et par exemple périodiquement, de sorte qu'à l'issue de l'étape de calcul 120 ou bien de l'étape de réalisation 130, le dispositif d'aide au pilotage 20 retourne à l'étape initiale de détermination 100 afin d'estimer une nouvelle valeur de chaque critère opérationnel CO surveillé.

En complément ou en variante, les étapes de détermination 100, d'estimation 110 et de calcul 120 sont mises en œuvre à nouveau, i.e. réitérées, suite à la détection, lors d'une étape de détection complémentaire, non représentée, d'au moins une évolution parmi la modification de l'environnement de l'aéronef 10, le changement de la valeur souhaitée du critère opérationnel CO respectif et une action du pilote différente de celle prévue.

La modification de l'environnement de l'aéronef 10 est par exemple une modification de l'environnement météorologique, ou encore la réception d'un message NOTAM (de l'anglais *NOTice to AirMen*), i.e. d'un message aux navigants aériens, généralement publié par les agences gouvernementales de contrôle de la navigation aérienne dans le but d'informer les pilotes d'évolutions d'infrastructures.

Ainsi, le dispositif d'aide au pilotage 20 selon l'invention offre une aide significative à l'utilisateur, tel que le pilote de l'aéronef 10, en lui permettant d'évaluer plus efficacement les chances de réussite de la mission de l'aéronef 10 ou des besoins de replanification de celle-ci, ceci en estimant la valeur de chaque critère opérationnel CO associée à la mission, puis en affichant la valeur estimée et les variations de chaque critère opérationnel CO. Cette réduction de la charge cognitive pour l'utilisateur permet alors d'améliorer la sécurité du vol de l'aéronef 10.

De par le calcul régulier, de préférence périodique, de l'écart entre les valeurs estimée et souhaitée du critère opérationnel CO, le dispositif d'aide au pilotage 20 assure aussi un rôle d'ange gardien pour le pilotage de l'aéronef 10, typiquement en attirant l'attention de l'utilisateur sous forme d'une alerte visuelle et/ou sonore si l'écart calculé est supérieur au seuil prédéfini.

Le dispositif d'aide au pilotage 20 permet également de fournir à l'utilisateur une indication quant à la grandeur causale qui est principalement à l'origine de cet écart. Ceci permet alors de mieux expliquer à l'utilisateur quelle est la cause de l'écart signalé, et alors de réduire encore sa charge cognitive, notamment pour savoir comment réagir afin de limiter cet écart. L'arbre de décision à logique floue 28 permet alors de rendre le diagnostic effectué plus intelligible pour l'utilisateur.

De plus, le dispositif d'aide au pilotage 20 permet d'aider le pilote à rechercher les symptômes d'une situation via la surveillance de plusieurs critères opérationnels à la fois, estimés en parallèle les uns des autres, tels que la sécurité, la ponctualité, le confort et l'écologie. Cette surveillance multicritères est alors encore plus pertinente et plus utile pour l'utilisateur lui permettant de réduire encore sa charge cognitive.

En outre, le dispositif d'aide au pilotage 20 est capable de prendre en compte les conséquences d'une évolution du contexte, telle que la modification d'un environnement de l'aéronef, le changement d'une intention du pilote pour au moins un critère opérationnel, et une action du pilote différente d'une action prévue. Le dispositif d'aide au pilotage 20 permet alors à l'utilisateur de mieux évaluer l'impact de cette évolution du contexte par rapport à la valeur souhaitée de chaque critère opérationnel CO, i.e. la performance initialement définie de l'aéronef 10 lors de sa mission.

## Revendications

1. Procédé d'aide au pilotage d'un aéronef (10) par un pilote, via la surveillance d'au moins un critère opérationnel (CO) d'une mission de l'aéronef (10) au cours de l'exécution de ladite mission,
le procédé étant mis en œuvre par un dispositif électronique d'aide au pilotage (20) et comprenant, pour chaque critère opérationnel (CO), les étapes suivantes :
- détermination (100) d'une valeur de chaque grandeur caractéristique (K₁, K₂, K₃, K₄, K₅) d'un ensemble de grandeur(s) caractéristique(s) associé audit critère opérationnel (CO), l'ensemble de grandeur(s) caractéristique(s) étant spécifique à chaque critère opérationnel (CO) et prédéfini pour chaque critère opérationnel (CO), chaque grandeur caractéristique (K₁, K₂, K₃, K₄, K₅) étant déterminée à partir d'au moins une variable avionique, chaque variable avionique étant acquise depuis une source choisie parmi un système avionique (12), un capteur (16) et une base de données (14) ;
- estimation (110) d'une valeur du critère opérationnel (CO) à partir de chaque valeur déterminée de grandeur caractéristique (K₁, K₂, K₃, K₄, K₅) associée audit critère opérationnel (CO) et via la mise en œuvre d'un algorithme d'intelligence artificielle (26) ;
- calcul (120) d'un écart entre la valeur estimée du critère opérationnel (CO) et une valeur souhaitée dudit critère opérationnel (CO), et d'une grandeur caractéristique, dite grandeur causale, qui est la principale cause dudit écart, ladite grandeur causale étant calculée via l'algorithme d'intelligence artificielle (26) ;
- si l'écart calculé est supérieur à un seuil prédéfini, réalisation (130) d'au moins une action choisie parmi le groupe consistant en : affichage, sur un système d'affichage (18), de la valeur estimée du critère opérationnel (CO), de l'écart calculé et d'une indication de la grandeur causale ; émission d'une alerte en fonction de l'écart calculé ; et génération d'une instruction de commande d'un système avionique (12) en fonction de la valeur estimée du critère opérationnel (CO),
l'au moins une action réalisée comportant l'affichage, sur le système d'affichage (18), de la valeur estimée du critère opérationnel (CO), de l'écart calculé et d'une indication de la grandeur causale.

2. Procédé selon la revendication 1, dans lequel le procédé comprend en outre l'étape suivante :
- détection d'au moins une évolution parmi le groupe consistant : modification d'un environnement de l'aéronef (10), changement de la valeur souhaitée d'un critère opérationnel (CO) respectif, et action du pilote différente d'une action prévue ;
les étapes de détermination (100), d'estimation (110) et de calcul (120) étant alors mises en œuvre à nouveau suite à cette détection et en fonction de l'au moins une évolution détectée.

3. Procédé selon l'une quelconque des revendications précédentes, dans lequel les étapes de détermination (100), d'estimation (110) et de calcul (120) sont réitérées régulièrement ;
les étapes de détermination (100), d'estimation (110) et de calcul (120) étant de préférence réitérées périodiquement ;
la période entre deux itérations successives des étapes de détermination (100), d'estimation (110) et de calcul (120) étant de préférence encore inférieure à 10 secondes.

4. Procédé selon l'une quelconque des revendications précédentes, dans lequel pour chaque critère opérationnel (CO), l'ensemble de grandeur(s) caractéristique(s) associé audit critère opérationnel (CO) et/ou la valeur souhaitée dudit critère opérationnel (CO) sont consultables et modifiables par un utilisateur.

5. Procédé selon l'une quelconque des revendications précédentes, dans lequel plusieurs critères opérationnels (CO) sont surveillés ;
les critères opérationnels (CO) étant de préférence surveillés simultanément.

6. Procédé selon l'une quelconque des revendications précédentes, dans lequel chaque critère opérationnel (CO) est choisi parmi le groupe consistant en : sécurité, ponctualité, confort, et écologie ;
si plusieurs critères opérationnels (CO) sont surveillés, les critères opérationnels (CO) sont de préférence tous les critères opérationnels du groupe consistant en : sécurité, ponctualité, confort, et écologie.

7. Procédé selon la revendication 6, dans lequel l'ensemble de grandeur(s) caractéristique(s) associé à la sécurité comporte : une portance de l'aéronef (10), un ratio entre quantité de carburant disponible et quantité de carburant nécessaire, et un indicateur quantifiant le respect par l'aéronef (10) d'un plan de vol ;
dans lequel l'ensemble de grandeur(s) caractéristique(s) associé à la ponctualité comporte : un indicateur quantifiant un retard de l'aéronef (10) à l'arrivée, un ratio en un nombre de passagers ayant ratés une correspondance à l'arrivée et un nombre total de passagers du vol en retard, un indicateur quantifiant un retard d'un vol suivant de l'aéronef (10) dû au retard du vol courant de l'aéronef (10) ;
dans lequel l'ensemble de grandeur(s) caractéristique(s) associé au confort comporte : un indicateur de retard au décollage, un nombre d'accélération(s) verticale(s) supérieure(s) à un seuil prédéfini au cours du vol et une durée cumulée d'accélération(s) verticale(s) supérieure(s) à un seuil prédéfini au cours du vol ; et
dans lequel l'ensemble de grandeur(s) caractéristique(s) associé à l'écologie comporte : une quantité d'émission de dioxyde de carbone au cours du vol, un indicateur d'utilisation de courants d'air favorables pour modifier la trajectoire de l'aéronef (10) par rapport à une trajectoire initialement prévue, un niveau de bruit généré au sol lors de l'atterrissage, un ratio entre une quantité de dioxyde de carbone émise au cours du vol et un nombre de passagers transportés.

8. Procédé selon l'une quelconque des revendications précédentes, dans lequel l'algorithme d'intelligence artificielle (26) comporte un arbre de décision à logique floue (28),
l'arbre de décision à logique floue (28) incluant de préférence au moins un système d'inférence flou (FIS₁, FIS₂, FIS₃, FIS₄, FIS₅), chaque système d'inférence flou (FIS₁, FIS₂, FIS₃, FIS₄, FIS₅) étant configuré pour recevoir en entrée au moins une valeur déterminée de grandeur caractéristique (K₁, K₂, K₃, K₄, K₅) et pour délivrer en sortie une valeur unitaire d'évaluation ; pour chaque système d'inférence flou (FIS₁, FIS₂, FIS₃, FIS₄, FIS₅), une correspondance entre entrée(s) et sortie étant établie par logique floue ; la valeur du critère opérationnel (CO) étant alors estimée à partir de la ou des valeurs unitaires d'évaluation calculées pour l'ensemble de grandeur(s) caractéristique(s) associé audit critère opérationnel (CO).

9. Procédé selon l'une quelconque des revendications précédentes, dans lequel le procédé comprend en outre une étape préliminaire d'apprentissage de l'algorithme d'intelligence artificielle (26) à partir de données d'apprentissage ;
l'apprentissage préliminaire de l'algorithme d'intelligence artificielle (26) étant de préférence un apprentissage supervisé ;
si l'algorithme d'intelligence artificielle (26) comporte un arbre de décision à logique floue (28), l'apprentissage préliminaire de l'arbre de décision à logique floue (28) étant de préférence encore effectué via la mise en œuvre d'un algorithme génétique.

10. Programme d'ordinateur, comportant des instructions logicielles qui, lorsqu'elles sont exécutées par un ordinateur, mettent en œuvre un procédé selon l'une quelconque des revendications précédentes.

11. Dispositif électronique d'aide au pilotage (20) d'un aéronef (10) par un pilote, via la surveillance d'au moins un critère opérationnel (CO) d'une mission de l'aéronef (10) au cours de l'exécution de ladite mission, le dispositif (20) comprenant :
- un module de détermination (22) configuré pour déterminer, pour chaque critère opérationnel (CO), une valeur de chaque grandeur caractéristique (K₁, K₂, K₃, K₄, K₅) d'un ensemble de grandeur(s) caractéristique(s) associé audit critère opérationnel (CO), l'ensemble de grandeur(s) caractéristique(s) étant spécifique à chaque critère opérationnel (CO) et prédéfini pour chaque critère opérationnel (CO), chaque grandeur caractéristique (K₁, K₂, K₃, K₄, K₅) étant déterminée à partir d'au moins une variable avionique, chaque variable avionique étant acquise depuis une source choisie parmi un système avionique (12), un capteur et une base de données ;
- un module d'estimation (24) configuré pour estimer, pour chaque critère opérationnel (CO), une valeur du critère opérationnel (CO) à partir de chaque valeur déterminée de grandeur caractéristique (K₁, K₂, K₃, K₄, K₅) associée audit critère opérationnel (CO) et via la mise en œuvre d'un algorithme d'intelligence artificielle (26) ;
- un module de calcul (30) configuré pour calculer un écart entre la valeur estimée du critère opérationnel (CO) et une valeur souhaitée dudit critère opérationnel (CO), et une grandeur caractéristique, dite grandeur causale, qui est la principale cause dudit écart, ladite grandeur causale étant calculée via l'algorithme d'intelligence artificielle (26) ;
- un module de réalisation (32) configuré pour, si l'écart calculé est supérieur à un seuil prédéfini, réaliser au moins une action choisie parmi le groupe consistant en : affichage, sur un système d'affichage (18), de la valeur estimée du critère opérationnel (CO), de l'écart calculé et d'une indication de la grandeur causale , émission d'une alerte en fonction de l'écart calculé, et génération d'une instruction de commande d'un système avionique (12) en fonction de la valeur estimée du critère opérationnel (CO) et de l'écart calculé
l'au moins une action réalisée comportant l'affichage, sur le système d'affichage (18), de la valeur estimée du critère opérationnel (CO), de l'écart calculé et d'une indication de la grandeur causale.

12. Aéronef (10) comprenant un dispositif électronique (20) d'aide au pilotage d'un aéronef (10), le dispositif d'aide au pilotage (20) étant conforme à la revendication précédente.

## Patentansprüche

1. Verfahren zur Unterstützung der Steuerung eines Luftfahrzeugs (10) durch einen Piloten, über die Überwachung mindestens eines Betriebskriteriums (CO) einer Mission des Luftfahrzeugs (10) während der Ausführung der besagten Mission,
wobei das Verfahren durch eine elektronische Vorrichtung zur Unterstützung der Steuerung (20) implementiert wird und für jedes Betriebskriterium (CO) die folgenden Schritte umfasst:
- Bestimmung (100) eines Werts jeder charakteristischen Größe (K₁, K₂, K₃, K₄, K₅) eines Satzes von charakteristische(n) Größe(n), der dem besagten Betriebskriterium (CO) zugeordnet ist, wobei der Satz von charakteristische(n) Größe(n) für jedes Betriebskriterium (CO) spezifisch und für jedes Betriebskriterium (CO) vordefiniert ist, wobei jede charakteristische Größe (K₁, K₂, K₃, K₄, K₅) ausgehend von mindestens einer Avionikvariablen bestimmt wird, wobei jede Avionikvariable von einer Quelle erfasst wird, die ausgewählt ist unter einem Avioniksystem (12), einem Sensor (16) und einer Datenbank (14);
- Schätzung (110) eines Werts des Betriebskriteriums (CO) ausgehend von jedem bestimmten Wert der charakteristischen Größe (K₁, K₂, K₃, K₄, K₅), die dem besagten Betriebskriterium (CO) zugeordnet ist, und über die Implementierung eines Künstliche-Intelligenz-Algorithmus (26);
- Berechnung (120) einer Abweichung zwischen dem geschätzten Wert des Betriebskriteriums (CO) und einem gewünschten Wert des besagten Betriebskriteriums (CO), und einer charakteristischen Größe, Ursachengröße genannt, die die Hauptursache der besagten Abweichung ist, wobei die besagte Ursachengröße über den Künstliche-Intelligenz-Algorithmus (26) berechnet wird;
- wenn die berechnete Abweichung größer als ein vordefinierter Schwellenwert ist, Durchführen (130) mindestens einer Aktion, ausgewählt aus der Gruppe, bestehend aus: Anzeigen, auf einem Anzeigesystem (18), des geschätzten Werts des Betriebskriteriums (CO), der berechneten Abweichung und einer Angabe der Ursachengröße; Ausgeben einer Warnung in Abhängigkeit von der berechneten Abweichung; und Erzeugen einer Steueranweisung eines Avioniksystems (12) in Abhängigkeit von dem geschätzten Wert des Betriebskriteriums (CO),
wobei die mindestens eine durchgeführte Aktion das Anzeigen, auf dem Anzeigesystem (18), des geschätzten Werts des Betriebskriteriums (CO), der berechneten Abweichung und einer Angabe der Ursachengröße umfasst.

2. Verfahren nach Anspruch 1, in dem das Verfahren ferner den folgenden Schritt umfasst:
- Detektion mindestens einer Entwicklung aus der Gruppe, bestehend aus: Änderung einer Umgebung des Luftfahrzeugs (10), Änderung des gewünschten Werts eines jeweiligen Betriebskriteriums (CO), und Aktion des Piloten, die sich von einer vorgesehenen Aktion unterscheidet;
wobei die Schritte der Bestimmung (100), der Schätzung (110) und der Berechnung (120) dann infolge dieser Detektion und in Abhängigkeit von der mindestens einen detektierten Entwicklung erneut implementiert werden.

3. Verfahren nach einem beliebigen der vorhergehenden Ansprüche, in dem die Schritte der Bestimmung (100), der Schätzung (110) und der Berechnung (120) regelmäßig wiederholt werden;
wobei die Schritte der Bestimmung (100), der Schätzung (110) und der Berechnung (120) vorzugsweise periodisch wiederholt werden;
wobei die Periode zwischen zwei aufeinanderfolgenden Iterationen der Schritte der Bestimmung (100), der Schätzung (110) und der Berechnung (120) noch bevorzugter weniger als 10 Sekunden beträgt.

4. Verfahren nach einem beliebigen der vorhergehenden Ansprüche, in dem für jedes Betriebskriterium (CO) der Satz von charakteristische(n) Größe(n), der dem besagten Betriebskriterium (CO) zugeordnet ist, und/oder der gewünschte Wert des besagten Betriebskriteriums (CO) durch einen Benutzer einsehbar und änderbar sind.

5. Verfahren nach einem beliebigen der vorhergehenden Ansprüche, in dem mehrere Betriebskriterien (CO) überwacht werden;
wobei die Betriebskriterien (CO) vorzugsweise gleichzeitig überwacht werden.

6. Verfahren nach einem beliebigen der vorhergehenden Ansprüche, in dem jedes Betriebskriterium (CO) ausgewählt ist aus der Gruppe, bestehend aus: Sicherheit, Pünktlichkeit, Komfort, und Ökologie;
wenn mehrere Betriebskriterien (CO) überwacht werden, sind die Betriebskriterien (CO) vorzugsweise alle Betriebskriterien der Gruppe, bestehend aus: Sicherheit, Pünktlichkeit, Komfort, und Ökologie.

7. Verfahren nach Anspruch 6, in dem der Satz von charakteristische(n) Größe(n), der der Sicherheit zugeordnet ist, umfasst: einen Auftrieb des Luftfahrzeugs (10), ein Verhältnis zwischen verfügbarer Kraftstoffmenge und notwendiger Kraftstoffmenge, und einen Indikator, der die Einhaltung eines Flugplans durch das Luftfahrzeug (10) quantifiziert;
in dem der Satz von charakteristische(n) Größe(n), der der Pünktlichkeit zugeordnet ist, umfasst: einen Indikator, der eine Verspätung des Luftfahrzeugs (10) bei der Ankunft quantifiziert, ein Verhältnis zwischen einer Anzahl von Passagieren, die bei der Ankunft einen Anschluss verpasst haben, und einer Gesamtanzahl von Passagieren des verspäteten Flugs, einen Indikator, der eine Verspätung eines nachfolgenden Flugs des Luftfahrzeugs (10) aufgrund der Verspätung des laufenden Flugs des Luftfahrzeugs (10) quantifiziert;
in dem der Satz von charakteristische(n) Größe(n), der dem Komfort zugeordnet ist, umfasst: einen Indikator für Verspätung beim Start, eine Anzahl von vertikalen Beschleunigung(en), die im Laufe des Flugs größer als ein vordefinierter Schwellenwert ist/sind, und eine kumulierte Dauer von vertikalen Beschleunigung(en), die im Laufe des Flugs größer als ein vordefinierter Schwellenwert ist/sind; und
in dem der Satz von charakteristische(n) Größe(n), der der Ökologie zugeordnet ist, umfasst: eine Emissionsmenge von Kohlendioxid im Laufe des Flugs, einen Indikator für die Nutzung günstiger Luftströmungen, um die Flugbahn des Luftfahrzeugs (10) gegenüber einer ursprünglich vorgesehenen Flugbahn zu ändern, einen Geräuschpegel, der bei der Landung am Boden erzeugt wird, ein Verhältnis zwischen einer Menge von im Laufe des Flugs ausgestoßenem Kohlendioxid und einer Anzahl von beförderten Passagieren.

8. Verfahren nach einem beliebigen der vorhergehenden Ansprüche, in dem der Künstliche-Intelligenz-Algorithmus (26) einen Entscheidungsbaum mit Fuzzy-Logik (28) umfasst,
wobei der Entscheidungsbaum mit Fuzzy-Logik (28) vorzugsweise mindestens ein Fuzzy-Inferenzsystem (FIS₁, FIS₂, FIS₃, FIS₄, FIS₅) einschließt, wobei jedes Fuzzy-Inferenzsystem (FIS₁, FIS₂, FIS₃, FIS₄, FIS₅) konfiguriert ist, um am Eingang mindestens einen bestimmten Wert der charakteristischen Größe (K₁, K₂, K₃, K₄, K₅) zu empfangen und am Ausgang einen Einheitsbewertungswert zu liefern; wobei für jedes Fuzzy-Inferenzsystem (FIS₁, FIS₂, FIS₃, FIS₄, FIS₅) eine Entsprechung zwischen Eingang/Eingängen und Ausgang durch Fuzzy-Logik hergestellt wird ; wobei der Wert des Betriebskriteriums (CO) dann ausgehend von dem oder den Einheitsbewertungswerten geschätzt wird, die für den Satz von charakteristische(n) Größe(n), der dem besagten Betriebskriterium (CO) zugeordnet ist, berechnet werden.

9. Verfahren nach einem beliebigen der vorhergehenden Ansprüche, in dem das Verfahren ferner einen vorläufigen Schritt des Lernens des Künstliche-Intelligenz-Algorithmus (26) ausgehend von Lerndaten umfasst;
wobei das vorläufige Lernen des Künstliche-Intelligenz-Algorithmus (26) vorzugsweise ein überwachtes Lernen ist;
wenn der Künstliche-Intelligenz-Algorithmus (26) einen Entscheidungsbaum mit Fuzzy-Logik (28) umfasst, wird das vorläufige Lernen des Entscheidungsbaums mit Fuzzy-Logik (28) noch bevorzugter über die Implementierung eines genetischen Algorithmus durchgeführt.

10. Computerprogramm, umfassend Softwareanweisungen, die, wenn sie durch einen Computer ausgeführt werden, ein Verfahren nach einem beliebigen der vorhergehenden Ansprüche implementieren.

11. Elektronische Vorrichtung zur Unterstützung der Steuerung (20) eines Luftfahrzeugs (10) durch einen Piloten, über die Überwachung mindestens eines Betriebskriteriums (CO) einer Mission des Luftfahrzeugs (10) während der Ausführung der besagten Mission, wobei die Vorrichtung (20) umfasst:
- ein Bestimmungsmodul (22), das konfiguriert ist, um für jedes Betriebskriterium (CO) einen Wert jeder charakteristischen Größe (K₁, K₂, K₃, K₄, K₅) eines Satzes von charakteristische(n) Größe(n) zu bestimmen, der dem besagten Betriebskriterium (CO) zugeordnet ist, wobei der Satz von charakteristische(n) Größe(n) für jedes Betriebskriterium (CO) spezifisch und für jedes Betriebskriterium (CO) vordefiniert ist, wobei jede charakteristische Größe (K₁, K₂, K₃, K₄, K₅) ausgehend von mindestens einer Avionikvariablen bestimmt wird, wobei jede Avionikvariable von einer Quelle erfasst wird, die ausgewählt ist unter einem Avioniksystem (12), einem Sensor und einer Datenbank;
- ein Schätzmodul (24), das konfiguriert ist, um für jedes Betriebskriterium (CO) einen Wert des Betriebskriteriums (CO) ausgehend von jedem bestimmten Wert der charakteristischen Größe (K₁, K₂, K₃, K₄, K₅), die dem besagten Betriebskriterium (CO) zugeordnet ist, und über die Implementierung eines Künstliche-Intelligenz-Algorithmus (26) zu schätzen;
- ein Berechnungsmodul (30), das konfiguriert ist, um eine Abweichung zwischen dem geschätzten Wert des Betriebskriteriums (CO) und einem gewünschten Wert des genannten Betriebskriteriums (CO), und eine charakteristische Größe, genannt Ursachengröße, die die Hauptursache der genannten Abweichung ist, zu berechnen, wobei die genannte Ursachengröße über den Künstliche-Intelligenz-Algorithmus (26) berechnet wird;
- ein Ausführungsmodul (32), das konfiguriert ist, um, wenn die berechnete Abweichung größer als ein vordefinierter Schwellenwert ist, mindestens eine Aktion durchzuführen, die aus der Gruppe ausgewählt ist, bestehend aus: Anzeige, auf einem Anzeigesystem (18), des geschätzten Werts des Betriebskriteriums (CO), der berechneten Abweichung und einer Angabe der Ursachengröße , Ausgabe eines Alarms in Abhängigkeit von der berechneten Abweichung, und Erzeugung einer Steueranweisung eines Avioniksystems (12) in Abhängigkeit von dem geschätzten Wert des Betriebskriteriums (CO) und der berechneten Abweichung;
wobei die mindestens eine durchgeführte Aktion die Anzeige, auf dem Anzeigesystem (18), des geschätzten Werts des Betriebskriteriums (CO), der berechneten Abweichung und einer Angabe der Ursachengröße umfasst.

12. Luftfahrzeug (10), umfassend eine elektronische Vorrichtung (20) zur Unterstützung der Steuerung eines Luftfahrzeugs (10), wobei die Vorrichtung zur Unterstützung der Steuerung (20) nach dem vorhergehenden Anspruch ausgebildet ist.

## Claims

1. A method for assisting in the piloting of an aircraft (10) via the monitoring of at least one operational criterion (CO) of a mission of the aircraft (10) during the execution of said mission,
the method being implemented by an electronic assistance device (20) and comprising, for each operational criterion (CO), the following steps:
- determining (100) a value of each characteristic variable (K₁, K₂, K₃, K₄, K₅) of a set of characteristic variable(s) associated with said operational criterion (CO), the set of characteristic variable(s) being specific to each operational criterion (CO) and predefined for each operational criterion (CO), each characteristic variable (K₁, K₂, K₃, K₄, K₅) being determined from at least one avionics variable, each avionics variable being acquired from a source selected from an avionics system (12), a sensor (16) and a database (14);
- estimating (110) a value of the operational criterion (CO) on the basis of each determined value of a characteristic variable (K₁, K₂, K₃, K₄, K₅) associated with said operational criterion (CO) and via the implementation of an artificial intelligence algorithm (26);
- calculating (120) a deviation between the estimated value of the operational criterion (CO) and a desired value of said operational criterion (CO), and of a characteristic variable, known as the causal variable, which is the main cause of said deviation, said causal variable being calculated using the artificial intelligence algorithm (26);
- if the calculated deviation is greater than a predefined threshold, performing (130) at least one action selected from the group consisting of: displaying, on a display system (18), the estimated value of the operational criterion (CO), the calculated deviation and an indication of the causal variable; issuing an alert as a function of the calculated deviation; and generating an instruction to control an avionics system (12) as a function of the estimated value of the operational criterion (CO),
the at least one action performed comprising the displaying, on the display system (18), of the estimated value of the operational criterion (CO), the calculated deviation, and an indication of the causal variable.

2. The method according claim 1, wherein the method further comprises the following step:
- detecting at least one change from the group consisting of: a change in an environment of the aircraft (10), a change in the desired value of a respective operational criterion (CO), and action by the pilot that differs from a planned action;
the steps of determining (100), estimating (110) and calculating (120) are then implemented again following this detection and as a function of the at least one change detected.

3. The method according to any one of the preceding claims, wherein the steps of determining (100), estimating (110) and calculating (120) are repeated regularly;
the steps of determining (100), estimating (110) and calculating (120) are preferably repeated periodically;
the period between two successive iterations of the steps of determining (100), estimating (110) and calculating (120) even more preferably being less than 10 seconds.

4. The method according to any one of the preceding claims, wherein for each operational criterion (CO), the set of characteristic variable(s) associated with said operational criterion (CO) and/or the desired value of said operational criterion (CO) can be consulted and modified by a user.

5. The method according to any one of the preceding claims, wherein a plurality of operational criteria (CO) are monitored;
the operational criteria (CO) preferably being monitored simultaneously.

6. The method according to any one of the preceding claims, wherein each operational criterion (CO) is selected from the group consisting of: safety, punctuality, comfort, and ecology;
if a plurality of operational criteria (CO) are monitored, the operational criteria (CO) are preferably all the group's operational criteria consisting of: safety, punctuality, comfort and ecology.

7. The method according to claim 6, wherein the set of characteristic variable(s) associated with safety comprises: a lift of the aircraft (10), a ratio between the amount of fuel available and the amount of fuel required, and an indicator quantifying the aircraft's (10) adherence to a flight plan;
wherein the set of characteristic variable(s) associated with punctuality comprises: an indicator quantifying an arrival delay of the aircraft (10), a ratio between a number of passengers who missed a connection on arrival and a total number of passengers of the delayed flight, an indicator quantifying a delay of a subsequent flight of the aircraft (10) due to the delay of the current flight of the aircraft (10);
wherein the set of characteristic variable(s) associated with comfort comprises: a take-off delay indicator, a number of vertical accelerations above a predefined threshold during the flight and a cumulative duration of vertical accelerations above a predefined threshold during the flight; and
wherein the set of characteristic variable(s) associated with ecology comprises: a quantity of carbon dioxide emitted during flight, an indicator of the use of favourable air currents to modify the path of the aircraft (10) relative to a path initially planned, a level of noise generated on the ground during landing, a ratio between a quantity of carbon dioxide emitted during the flight and a number of passengers carried.

8. The method according to any one of the preceding claims, wherein the artificial intelligence algorithm (26) comprises a fuzzy logic decision tree (28),
the fuzzy logic decision tree (28) preferably including at least one fuzzy inference system (FIS₁, FIS₂, FIS₃, FIS₄, FIS₅), each fuzzy inference system (FIS₁, FIS₂, FIS₃, FIS₄, FIS₅) being configured to receive as input at least one given value of characteristic variable (K₁, K₂, K₃, K₄, K₅) and to deliver as output a unitary evaluation value; for each fuzzy inference system (FIS₁, FIS₂, FIS₃, FIS₄, FIS₅), a correspondence between input(s) and output being established by fuzzy logic; the value of the operational criterion (CO) then being estimated on the basis of the unit evaluation value(s) calculated for the set of characteristic variable(s) associated with said (CO) operational criterion.

9. The method according to any one of the preceding claims, wherein the method further comprises a preliminary learning step of training the artificial intelligence algorithm (26) on the basis of training data;
the preliminary learning of the artificial intelligence algorithm (26) preferably being supervised learning;
if the artificial intelligence algorithm (26) comprises a fuzzy logic decision tree (28), the preliminary learning of the fuzzy logic decision tree (28) preferably still being carried out via the implementation of a genetic algorithm.

10. A computer program comprising software instructions which, when executed by a computer, implement a method according to any one of the preceding claims.

11. Electronic device for assisting in the piloting (20) of an aircraft (10) via the monitoring of at least one operational criterion (CO) of a mission of the aircraft (10) during the execution of said mission, the device (20) comprising:
- a determination module (22) configured to determine, for each operational criterion (CO), a value of each characteristic variable (K₁, K₂, K₃, K₄, K₅) of a set of characteristic variable(s) associated with said operational criterion (CO), the set of characteristic variable(s) being specific to each operational criterion (CO) and predefined for each operational criterion (CO), each characteristic variable (K₁, K₂, K₃, K₄, K₅) being determined from at least one avionics variable, each avionics variable being acquired from a source selected from an avionics system (12), a sensor, and a database;
- an estimation module (24) configured to estimate, for each operational criterion (CO), a value of the operational criterion (CO) on the basis of each determined value of a characteristic variable (K₁, K₂, K₃, K₄, K₅) associated with said operational criterion (CO) and via the implementation of an artificial intelligence algorithm (26);
- a calculation module (30) configured to calculate a deviation between the estimated value of the operational criterion (CO) and a desired value of said operational criterion (CO), and of a characteristic variable, known as the causal variable, which is the main cause of said deviation, said causal variable being calculated using the artificial intelligence algorithm (26);
- a performance module (32) configured, if the calculated deviation is greater than a predefined threshold, to perform at least one action selected from the group consisting of: displaying, on a display system (18), the estimated value of the operational criterion (CO), the calculated deviation and an indication of the causal variable; issuing an alert as a function of the calculated deviation; and generating an instruction to control an avionics system (12) as a function of the estimated value of the operational criterion (CO) and the calculated deviation
the at least one action performed comprising the displaying, on the display system (18), of the estimated value of the operational criterion (CO), the calculated deviation, and an indication of the causal variable.

12. An aircraft (10) comprising an electronic device (20) for assisting in the piloting of an aircraft (10), the piloting assistance device (20) being in accordance with the preceding claim.
